# EUROPÄISCHE PATENTANMELDUNG

(11) **EP 3 620 226 A1**
(43) Veröffentlichungstag der Anmeldung: **11.03.2020**
(21) Anmeldenummer: 19188517.7
(22) Anmeldetag: 26.07.2019
(51) Int. Cl.: B01D 53/18, B01D 53/34, B01D 53/78, B01D 53/85

(54) **VORRICHTUNG ZUM BEHANDELN VON ABLUFT ODER ABGAS**

(30) Priorität: 07.09.2018 DE 102018121876
(71) Anmelder: Wessel-Umwelttechnik GmbH, 22529 Hamburg (DE)
(72) Erfinder: Schulze, Heino, 21217 Seevetal (DE)
(74) Vertreter: Frese Patent - Patentanwälte

(57) **Zusammenfassung**

Die Erfindung betrifft eine Vorrichtung zum Behandeln von Abluft oder Abgas, umfassend einen ersten Wäscher (1), der z.B. als Kolonnenwäscher mit einer Packung (6) ausgebildet ist, die von der Abluft oder dem Abgas durchströmbar und von oben mit einer Waschflüssigkeit (4) berieselbar ist, und einen zweiten Wäscher (2), der gegenüber dem ersten Wäscher (1) deutlich verringerte Druckverluste aufweist. Die Vorrichtung soll so verbessert werden, dass ihr Energiebedarf an eine Konzentration an Schadstoffen und/oder an einen zu behandelnden Volumenstrom angepasst werden kann. Dies wird dadurch erreicht, dass der zweite Wäscher (2) mittels eines Absperrorgans (13) verschließbar ist.

## Beschreibung

Die Erfindung betrifft eine Vorrichtung zum Behandeln von Abluft oder Abgas, die einen ersten Wäscher, der mit einer Packung ausgebildet ist, die von der Abluft oder dem Abgas durchströmt und von oben mit einer Waschflüssigkeit berieselt wird, und einen zweiten Wäscher umfasst, der gegenüber dem ersten Wäscher deutlich verringerte Druckverluste aufweist.

Vorrichtungen zum Behandeln von Abluft oder Abgas sind allgemein bekannt und werden z.B. als Filter, thermische Apparate und/oder Wäscher ausgeführt, wobei die unterschiedlichen Vorrichtungen wiederum in verschiedenen Varianten ausgestattet sein können. So sind für die Wäscher chemisch oder biologisch arbeitende Varianten bekannt, die jeweils mit unterschiedlichen Ausrüstungen und/oder Betriebsweisen ausgestattet sind.

Wäscher mit Füllkörpern oder ähnlichen Einbauten wie z.B. Kolonnenwäscher weisen eine hohe raumspezifische Absorptionsleistung auf und werden daher bevorzugt als biologische oder als chemische Wäscher eingesetzt. Sie weisen aber den Nachteil auf, dass sie relativ hohe Druckverluste haben und daher für die Förderung der Abluft oder des Abgases durch den Wäscher relativ viel Energie aufgewendet werden muss. Dieser relativ hohe Energieaufwand ist nach dem Stand der Technik bei einer fertig ausgelegten und hergestellten Vorrichtung zum Reinigen von Abluft oder Abgas unabhängig vom zu behandelnden Volumenstrom und/oder insbesondere dessen Konzentration an Schadstoffen. Zusätzliche Druckverluste können durch z.B. Vermehrung der Biomasse und Ablagerung von Feststoffpartikeln entstehen, was ein Spülen der Einbauten erforderlich macht.

Wäscher ohne Füllkörper wie z.B. Sprühwäscher haben zwar geringere Druckverluste, weisen dafür aber eine geringe raumspezifische Absorptionsleistung auf. Außerdem neigen sie nicht zu Verschmutzungen durch z.B. Anreicherung von Biomasse und/oder Ablagerungen von festen Bestandteilen des Abgases oder der Abluft.

Aus der EP 895 800 A1 ist eine Absorptionskolonne bekannt, in die eine Waschkolonne integriert ist. Die Absorptionskolonne ist mit Füllkörpern ausgerüstet, durch die das Abgas von unten nach oben geleitet wird. Auf die Füllkörper wird von oben Waschflüssigkeit aufgegeben. Das teilgereinigte Abgas wird oben in der Absorptionskolonne in die Waschkolonne umgeleitet und mit Waschflüssigkeit besprüht und hierdurch weiter gereinigt. Die Absorptionskolonne und die Waschkolonne sind hintereinandergeschaltet; ein getrennter Betrieb der Absorptionskolonne und der Waschkolonne ist somit nicht möglich.

In der Praxis sind die zu behandelnden Abluft- oder Abgasströme sowohl im Volumen als auch in der Konzentration großen, meist kurzzeitigen Schwankungen unterlegen. Ein Verhältnis minimaler zu maximaler Schadstofffracht kann 1 zu 25 oder weniger betragen. Vorrichtungen zum Behandeln der Abluft oder des Abgases sind grundsätzlich auf die maximale Fracht der zu behandelnden Schadstoffe bemessen und betrieben, weil sich ein Betrieb der Wäscher nicht - zumindest nicht kurzfristig, nicht ohne Betriebsunterbrechung und ohne hohen Arbeitsaufwand - an die tatsächlichen Frachten und Volumenströme anpassen lässt. Dies hat einen entsprechend konstant hohen Energiebedarf des Ventilators zur Folge.

Es ist die Aufgabe der Erfindung, eine Vorrichtung zum Behandeln von Abluft oder Abgas zu schaffen, bei der ein Energiebedarf an den zu behandelnden Volumenstrom und/oder insbesondere an dessen Konzentration an Schadstoffen angepasst werden kann.

Die Aufgabe ist durch die Merkmale des Anspruchs 1 gelöst. Der zweite Wäscher ist mittels eines Absperrorgans zumindest teilweise verschließbar. Hierdurch kann die Abluft oder das Abgas - im Folgenden vereinfacht als Abgas bezeichnet - gezielt durch den Teil der Vorrichtung geleitet werden, der für die zu behandelnde Schadstofffracht im Verhältnis zum erforderlichen Volumen der Vorrichtung und zum Energieaufwand am günstigsten ist. Hierbei teilt sich das Volumen entsprechend den Druckverlusten auf den ersten und den zweiten Wäscher auf.

Das Absperrorgan kann in jeder geeigneten Form ausgebildet sein, z.B. als Schieber oder als Absperrklappe.

Bei hoher Schadstofffracht ist das Absperrorgan geschlossen und das Abgas wird ausschließlich in den ersten Wäscher geleitet und hier behandelt. Hierbei wird eine hohe raumspezifische Absorptionsleistung des Systems erzielt.

Ist dagegen die zu behandelnde Schadstofffracht geringer, wird das Absperrorgan zumindest teilweise geöffnet. Aufgrund des geringeren Druckverlustes strömt das Abgas entsprechend der Öffnung des Absperrorgans durch den zweiten Wäscher und wird hier gereinigt. Die Leistung einer Einrichtung zur Förderung des Abgases, z.B. eines oder mehrerer Ventilatoren, kann gedrosselt werden, ohne dass es zu Leistungseinbußen der Abgasreinigung kommt und ohne dass das behandelte, also gereinigte Abgas unzulässig hohe Konzentrationen an Schadstoffen aufweist. Der Energieverbrauch wird wegen des geringeren Druckverlustes erheblich um bis zu 90 % reduziert.

Zwischenstellungen des Absperrorgans sind ebenfalls einstellbar, um Schadstofffrachten zwischen einem maximal und einem minimal zu erwartenden Wert zufriedenstellend und energetisch günstig behandeln zu können.

Querschnitte des ersten und des zweiten Wäschers werden bei der Auslegung der Vorrichtung zum Behandeln in Abhängigkeit von der zu erwartenden Schadstofffracht und dessen Schwankungen ermittelt.

Die Unteransprüche betreffen die vorteilhafte Ausgestaltung der Erfindung.

In einer Ausgestaltung ist der zweite Wäscher innerhalb des Kolonnenwäschers angeordnet. Hierdurch ist die Vorrichtung insgesamt kompakt und platzsparend. Weiterhin fallen keine zusätzlichen Leitungen für die Führung des Abgases an, weil die Zuführung zu dem ersten und/oder zu dem zweiten Wäscher allein über die Stellung des Schiebers gesteuert werden kann.

In einer weiteren Ausgestaltung ist das Absperrorgan an einem oberen Ende des zweiten Wäschers angeordnet. Hier ist das Abgas behandelt und daher weniger korrosiv. Weiterhin ist das Absperrorgan besser zugänglich.

In einer weiteren Ausgestaltung ist eine senkrechte Längsachse des zweiten Wäschers koaxial mit einer Längsachse des Kolonnenwäschers. Dies bewirkt eine besonders einfache Führung des Abgases und hat strömungstechnische Vorteile.

In einer weiteren Ausgestaltung wird der Kolonnenwäscher im Gegenstrom durchströmt. Dies erleichtert die Führung des Abgases weiter und erhöht die Effizienz der Vorrichtung.

In einer weiteren Ausgestaltung ist der zweite Wäscher als Sprühwäscher ausgebildet. Dieser weist besonders niedrige Druckverluste auf.

Die Erfindung wird anhand der schematischen Zeichnung weiter erläutert. Es zeigen
Figur 1 einen senkrechten Schnitt durch eine bevorzugte Variante einer Vorrichtung zur Behandlung von Abgas und
Figur 2 einen waagerechten Schnitt durch die Vorrichtung der Figur 1.

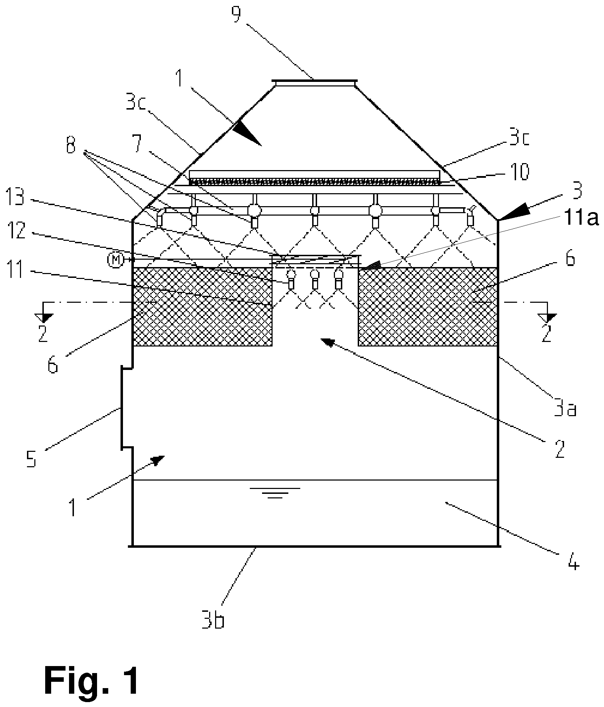

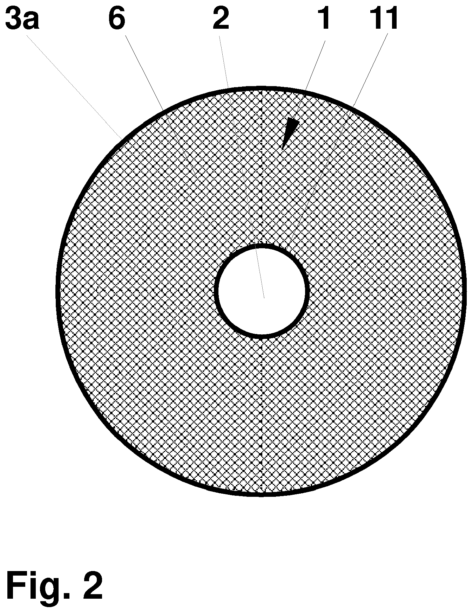

Wie aus den Figuren 1 und 2 ersichtlich umfasst eine Vorrichtung zur Behandlung von Abgas (oder Abluft) einen ersten Wäscher 1 und einen zweiten Wäscher 2, die parallel geschaltet sind. Die Wäscher 1, 2 sind also gleichzeitig von dem Abgas durchströmbar. Die Vorrichtung ist insgesamt als biologischer oder als chemischer Wäscher ausgebildet.

Der erste Wäscher 1 ist als Kolonnenwäscher ausgebildet und umfasst ein äußeres, im Wesentlichen dichtes Gehäuse 3, das einen zylindrischen Mantel 3a aufweist, an dessen unteren Ende ein flacher Boden 3b und am oberen Ende ein Deckel 3c in Form eines umgekehrten, sich nach oben verjüngenden Trichters befestigt sind. Ein unterer Bereich des Gehäuses 3 ist als Becken für eine Waschflüssigkeit 4 ausgebildet. Oberhalb dieses unteren Bereiches für die Waschflüssigkeit 4 ist an dem Mantel 3a ein Stutzen 5 zum Anschluss einer Abgaszuleitung für eine Zuführung des Abgases in die Vorrichtung angeordnet.

In dem Gehäuse 3 ist oberhalb des Stutzens 5 eine Packung 6 angeordnet, die eine Vergrößerung einer Kontaktfläche zwischen dem Abgas und der Waschflüssigkeit 4 und gegebenenfalls für eine Ansiedlung von Mikroorganismen sorgt. Eine Höhe der Packung 6 ist entsprechend den Anforderungen (Art/Menge der Schadstoffe und geforderte Reinigungsleistung) bemessen und erstreckt sich innerhalb einer Höhe des Mantels 3a.

Oberhalb der Packung 6 sind Mittel zum Verrieseln oder Versprühen der Waschflüssigkeit 4 auf die Packung 6 angeordnet. Die Mittel zum Verrieseln umfassen ein Rohrsystem 7 mit daran befestigten ersten Sprühdüsen 8 und gewährleisten eine gleichmäßige Verteilung der Waschflüssigkeit 4 auf einer Oberfläche der Packung 6.

An einem oberen Ende des Deckels 3c ist ein Flansch 9 zum Anschluss einer Reingasleitung zum Ableiten des gereinigten Abgases angeordnet.

Zwischen dem Flansch 9 und dem Rohrsystem 7 ist ein Tropfenabscheider 10 an dem Deckel 3c befestigt.

Der zweite Wäscher 2 ist hier in und koaxial zu dem ersten Wäscher 1 befestigt. Der zweite Wäscher 2 ist hier als Sprühwäscher ausgeführt und umfasst ein Rohrstück 11, das sich im Wesentlichen über die Höhe der Packung 6 erstreckt, eine Vielzahl von zweiten Sprühdüsen 12 und ein Absperrorgan 13.

Das Absperrorgan 13 ist an einem oberen Ende 11a des Rohrstücks 11 befestigt und als z.B. Klappe oder Schieber ausgebildet. Es weist einen elektromotorischen oder elektropneumatischen Antrieb auf.

Die zweiten Sprühdüsen 12 sind innerhalb des Rohrstücks 11 mit möglichst kurzem Abstand zu dem Absperrorgan 13 angeordnet.

Alternativ zu dem Sprühwäscher ist der zweite Wäscher 2 als Kolonnenwäscher mit geringer Schüttungshöhe ausgeführt. Dies ist besonders dann von Vorteil, wenn ein Verhältnis von minimaler Schadstofffracht zu maximaler Schadstofffracht größer als 1 zu 10 ist, also z.B. 1 zu 5 oder 1 zu 2.

Alternativ zu der koaxialen Anordnung des zweiten Wäschers 2 ist dieser an beliebiger anderer Stelle in die Packung 6 eingesetzt, hierbei bevorzugt an dem Mantel 3a. Auch eine Anordnung außerhalb des ersten Wäschers 1 ist möglich, was aber Nachteile gegenüber der innerhalb des ersten Wäschers 1 aufweist.

Querschnitte der Wäscher 1, 2 sind vorzugsweise kreisförmig und gleichartig ausgebildet oder alternativ vieleckig (z.B. als Rechteck oder als Oktogon), wobei eine Querschnittsform des ersten Wäschers 1 unterschiedlich von der des zweiten Wäschers 2 sein kann.

Die Wäscher 1, 2 sind aus üblichen Materialien wie Stahl, Edelstahl oder Kunststoff gefertigt. Eine Auslegung des ersten Wäschers 1 erfolgt entsprechend den Vorschriften nach der maximalen Schadstofffracht. Der zweite Wäscher 2 ist entsprechend dem Verhältnis der maximalen zur minimalen Schadstofffracht dimensioniert.

Im Betrieb wird das Abgas mittels eines nicht dargestellten Ventilators, dessen Antriebsmotor vorzugsweise geregelt, z.B. frequenzgeregelt ist, von einer Abluftquelle, z.B. aus einer Produktionszone abgezogen und durch die Abgasleitung in die Vorrichtung zum Behandeln des Abgases gefördert. Der Ventilator und sein Antrieb sind entsprechend einem maximal zu fördernden Abgasvolumen und gesamten Druckverlusten ausgelegt.

Gegebenenfalls sind Mittel zum Konditionieren des Abgases angeordnet, um z.B. Temperatur und Feuchte des Abgases auf geeignete Werte einzustellen.

Das Abgas wird durch die Vorrichtung geleitet und hierbei durch intensiven Kontakt mit der Waschflüssigkeit 4 auf geforderte Reingaswerte gereinigt. Die Waschflüssigkeit 4 ist mit Mikroorganismen (biologischer Wäscher) oder geeigneten Chemikalien (chemischer Wäscher) angereichert. Sie wird mittels einer Pumpe in einem Kreislauf aus dem Becken des ersten Wäschers 1 abgezogen, über Rohrleitungen den Sprühdüsen 8, 12 zugeführt, über der Packung 6 und in dem zweiten Wäscher 2 gleichmäßig verteilt und schwerkraftbedingt in dem Becken wieder aufgefangen. Das Reingas wird über z.B. einen Kamin in die Atmosphäre abgegeben.

Bei der maximal zu reinigenden Schadstofffracht, die durch die maximale Schadstoffkonzentration und/oder die maximale Abgasmenge festgelegt ist, ist das Absperrorgan 13 geschlossen. Das Abgas wird weitgehend gleichmäßig verteilt von unten nach oben durch den ersten Wäscher 1 und damit auch durch die Packung 6 geleitet. Hierbei wird das Abgas bei hoher raumspezifischer Abbauleistung gereinigt, das heißt es wird weitestgehend von Schadstoffen befreit.

Wenn die zu reinigende Schadstofffracht sinkt, das heißt bei fallender Schadstoffkonzentration und/oder Abgasmenge, wird das Absperrorgan 13 entsprechend der verminderten erforderlichen Abbauleistung teilweise oder ganz geöffnet. Ein Teil des Abgases wird daher durch den zweiten Wäscher 2 geleitet und bei geringerer raumspezifischer Abbauleistung gereinigt, während der Rest des Abgases weiter durch den ersten Wäscher 1 strömt. Der Druckverlust in der Vorrichtung sinkt entsprechend dem Öffnungsgrad des Absperrorgans 13 und der Ventilator wird entsprechend heruntergeregelt, was eine Verminderung des Stromverbrauchs zur Folge hat. Letztere beträgt bei voller Öffnung des Absperrorgans 13 bis zu 90 %.

Bei Biowäschern kann zudem eine Vergrößerung des Druckverlustes durch Anstieg von Biomasse im Gesamtsystem erfolgen. Diese Vergrößerung kann durch entsprechendes teilweises Öffnen des Absperrorgans 13 ausgeglichen werden. Hierdurch ist es möglich, Reinigungsintervalle zu verlängern und so den Wartungsaufwand zu vermindern.

Das Verstellen des Absperrorgans 13 und des Ventilators kann automatisch anhand von Messwerten, wobei entsprechende Mess- und Regelgeräte angeordnet sind, oder von Hand nach Erfahrungswerten erfolgen.

### Bezugszeichenliste

- 1: erster Wäscher
- 2: zweiter Wäscher
- 3: Gehäuse
- 3a: Mantel
- 3b: Boden
- 3c: Deckel
- 4: Waschflüssigkeit
- 5: Stutzen
- 6: Packung
- 7: Rohrsystem
- 8: erste Sprühdüse
- 9: Flansch
- 10: Tropfenabscheider
- 11: Rohr
- 11a: oberes Ende
- 12: zweite Sprühdüse
- 13: Absperrorgan

## Patentansprüche

1. Vorrichtung zum Behandeln von Abluft oder Abgas, umfassend
einen ersten Wäscher (1), der mit einer Packung (6) ausgebildet ist, die von der Abluft oder dem Abgas durchströmbar und von oben mit einer Waschflüssigkeit (4) berieselbar ist, und
einen zweiten Wäscher (2), der gegenüber dem ersten Wäscher (1) deutlich verringerte Druckverluste aufweist,
**dadurch gekennzeichnet, dass** der zweite Wäscher (2) mittels eines Absperrorgans (13) zumindest teilweise verschließbar ist.

2. Vorrichtung nach Anspruch 1, **dadurch gekennzeichnet, dass** der zweite Wäscher (2) innerhalb des ersten Wäschers (1) angeordnet ist.

3. Vorrichtung nach Anspruch 1 oder 2, **dadurch gekennzeichnet, dass** das Absperrorgan (13) an einem oberen Ende (11a) des zweiten Wäschers (2) angeordnet ist.

4. Vorrichtung nach Anspruch 2 oder 3, **dadurch gekennzeichnet, dass** eine senkrechte Längsachse des zweiten Wäschers (2) koaxial mit einer Längsachse des ersten Wäschers (1) ist.

5. Vorrichtung nach einem der Ansprüche 1 bis 4, **dadurch gekennzeichnet, dass** der erste Wäscher (1) als Kolonnenwäscher ausgebildet ist.

6. Vorrichtung nach einem der Ansprüche 1 bis 4, **dadurch gekennzeichnet, dass** der erste Wäscher (1) im Gegenstrom durchströmbar ist.

7. Vorrichtung nach einem der Ansprüche 1 bis 6, **dadurch gekennzeichnet, dass** der zweite Wäscher (2) als Sprühwäscher ausgebildet ist.

8. Vorrichtung nach einem der Ansprüche 1 bis 7, **dadurch gekennzeichnet, dass** der erste Wäscher (1) und der zweite Wäscher (2) parallel geschaltet sind.
